# FASCICULE DE BREVET EUROPEEN

(11) **EP 0 610 640 B1**
(45) Date de publication et mention de la délivrance du brevet: **21.10.1998**
(21) Numéro de dépôt: 93403212.9
(22) Date de dépôt: 30.12.1993
(51) Int. Cl.: G06K 7/10

(54) **Lecteur de vignettes de codes à barres, du type dit "à main" à profondeur de champ accrue**
Tragbarer Strichmarkierungsleser mit erweiterter Schärfentiefe
Portable bar-code reader with extended depth of focus

(30) Priorité: 11.01.1993 FR 9300159
(43) Date de publication de la demande: 17.08.1994
(73) Titulaire: INTERMEC SCANNER TECHNOLOGY CENTER, 31670 Labege Cédex (FR)
(72) Inventeur: Massieu, Jean-Louis, F-82000 Montauban (FR); Puech, Jean-Michel, F-31500 Toulouse (FR)
(74) Mandataire: CABINET BONNET-THIRION

(56) Documents cités:
- EP-A- 0 197 673
- FR-A- 2 673 738
- US-A- 4 743 773

## Description

L'invention se rapporte à un lecteur de vignettes de codes à barres, du type dit "à main" avec une fenêtre de lecture oblongue que l'on présente sensiblement parallèlement à la vignette avec une grande dimension en travers des barres, le lecteur comportant un objectif avec un axe optique normal à la fenêtre en son centre et propre à projeter une image conjuguée de la vignette sur une barrette photosensible comprenant une multiplicité d'éléments récepteurs à exploration électrique séquentielle, alignés dans un plan de mire contenant l'axe optique et parallèle à la grande dimension de fenêtre, et, à l'écart du plan de mire, une source lumineuse émettant vers la vignette à travers la fenêtre un faisceau étalé parallèlement à la grande dimension de fenêtre. Un tel lecteur de vignettes de codes à barres est décrit dans le document US-A-4,743,773.

Le système de code à barres est très largement répandu pour présenter les références d'articles de toute nature sous une forme convenant à la saisie automatique, afin d'identifier sans intervention de l'oeil humain ces références. Celles-ci sont codées, sur une vignette rectangulaire, par une succession d'éléments ou barres rectilignes, transversaux à la direction de succession, et alternativement foncés et clairs, de largeur multiple entier d'une largeur unité (multiple généralement de 1 à 3). La lecture se fait par balayage optique longitudinal de la vignette à vitesse approximativement constante, de façon à former un signal électrique correspondant à la référence codée portée par la vignette et compatible avec un traitement informatique.

On a utilisé, pour la lecture de telles vignettes, des sondes que l'on déplace à la main pour balayer la vignette ; la difficulté d'exécuter le balayage manuel à vitesse constante rend ces sondes peu aisées à manier efficacement ; il est fréquent que l'on soit obligé de reprendre le balayage plusieurs fois et la réponse est lente. La tendance est d'abandonner ce type de sonde pour des lecteurs à balayage incorporé.

Ces lecteurs à balayage incorporé sont de deux types principaux, des lecteurs dits "à main" car ils sont de petite dimension et présentés à la main sur la vignette pour la lecture, et les lecteurs au passage où le lecteur est fixe, et l'article est déplacé pour passer en regard d'une fenêtre de lecture.

Dans les lecteurs au passage, on utilise un faisceau lumineux en pinceau concentré convenablement dévié par des optiques tournantes, et un récepteur photosensible enregistre un signal lumineux formé par rétrodiffusion du faisceau concentré qui balaye la vignette.

On a défini ci-dessus la structure générale des lecteurs "à main" courants. La vignette est éclairée par un flux lumineux pratiquement fixe pendant la lecture, et son image est projetée par l'objectif sur la barrette photosensible, où le balayage séquentiel des éléments récepteurs forme le signal électrique représentatif du code porté par la vignette. On comprend qu'en service le balayage est répété cycliquement, et que, au fur et à mesure que le lecteur s'approche de la vignette, l'image formée par l'objectif sur la barrette devient de moins en moins floue, jusqu'à ce que la vignette soit dans le plan conjugué de la barrette photosensible. Le signal de balayage est en corollaire de mieux en mieux défini. Les dispositifs de pilotage de la barrette photosensible analysent le signal, et le valident dès que sa définition est suffisante.

Ainsi les caractéristiques de l'objectif (distance focale et ouverture) définissent une profondeur de champ dans les limites de laquelle le code de la vignette peut être lu sans ambiguïté ; par ailleurs cette profondeur de champ est prévisible pour un homme du métier.

Cependant les lecteurs "à main" actuels voient leur profondeur de champ limitée également par une autre cause, à savoir les conditions d'éclairement de la vignette. En effet, on conçoit que, d'une part, le lecteur doit être peu sensible à la lumière ambiante, ce qui implique l'utilisation d'une source lumineuse intégrée au lecteur avec un spectre qui se distingue de celui de l'éclairage ambiant, et, d'autre part, que cette source lumineuse doit envoyer sur la vignette un flux lumineux suffisamment intense pour pouvoir utiliser une ouverture d'objectif faible qui assure une profondeur de champ suffisante.

Or, la source lumineuse doit être à l'écart du plan de mire, sinon elle intercepterait l'image de la vignette pour la barrette photosensible, si cette source était située en avant de la barrette, tandis que celle-ci intercepterait le faisceau émis par la source si cette dernière était située en arrière de la barrette.

Classiquement le plan médian suivant lequel s'étale le faisceau issu de la source lumineuse forme avec le plan de mire un dièdre dont l'arête s'étend, parallèlement à la grande dimension de la fenêtre de lecture, dans le plan conjugué du plan de barrette photosensible pour l'objectif. Lorsque la vignette s'écarte de ce plan conjugué, la section de vignette par le plan de mire, dont l'image se forme sur la barrette, n'est éclairée que par une partie marginale du faisceau émis par la source ; l'éclairement utile diminue avec l'écart entre la vignette et le plan conjugué de la barrette, et ce d'autant plus vite que l'angle du dièdre plan médian de faisceau, plan de mire est grand. En outre la lumière rétrodiffusée par la vignette présente un maximum dans un plan symétrique du plan incident du faisceau par rapport à un plan normal à la vignette. Tout cela contribue à réduire la profondeur de champ efficace des lecteurs "à main" classiques.

On remarquera que, si l'on concentre le faisceau issu de la source lumineuse pour accroître l'éclairement aux environs du plan médian de ce faisceau, la décroissance d'éclairement avec l'écart au plan médian est plus marquée, et le gain de profondeur de champ est minime, sinon nul ou même négatif.

Pour pallier l'insuffisance de profondeur de champ des lecteurs "à main" classiques, l'invention propose un lecteur de vignettes de codes à barres, du type dit "à main" avec une fenêtre de lecture oblongue que l'on présente sensiblement parallèlement à la vignette avec une grande dimension en travers des barres, le lecteur comportant un objectif avec un axe optique proche de la normale à la fenêtre en son centre et propre à projeter une image conjuguée de la vignette sur une barrette photosensible comprenant une multiplicité d'éléments récepteurs à exploration électrique séquentielle, alignés dans un plan de mire contenant l'axe optique et parallèle à la grande dimension de fenêtre, et, disposée à l'écart du plan de mire, une source lumineuse émettant vers la vignette à travers la fenêtre un faisceau étalé parallèlement à la grande dimension de la fenêtre, caractérisé en ce que le faisceau traverse une optique prismatique à arêtes parallèles à la grande dimension de fenêtre, composée de deux réfracteurs disposés de part et d'autre d'une fente où passe le plan de mire, tels que le faisceau émergent émis par la source lumineuse soit sensiblement symétrique par rapport au plan de mire.

Il ressort de la définition ainsi énoncée de la structure de lecteur que, dans la zone utile où se place la vignette, le faisceau d'éclairage est généralement dirigé parallèlement au plan de mire ; de ce fait la partie de vignette interceptée par le plan de mire est dans la zone centrale du faisceau d'éclairage, à quelque distance que soit cette vignette de la fenêtre de lecture, sans toutefois que la source d'éclairage, et l'ensemble objectif-barrette photosensible se fassent écran l'un à l'autre. Ainsi la profondeur de champ globale se confond avec celle qui résulte des particularités de l'objectif, et cette profondeur de champ de l'objectif peut être accrue en mettant à profit la sensibilité élevée des barrettes photosensibles récentes pour diaphragmer l'objectif.

De préférence, les deux réfracteurs présentent des dioptres cylindriques à génératrices parallèles aux arêtes d'optique prismatique, tels que le faisceau émergent soit sensiblement parallèle au plan de mire. On comprend qu'ainsi les réfracteurs associent à la déviation angulaire des rayons lumineux une convergence telle que la source lumineuse soit sensiblement au foyer des lentilles cylindriques déterminées par les dioptres successifs traversés par le faisceau. Le faisceau d'éclairage étant parallèle au plan de mire dans la zone utile, l'éclairement de la vignette ne varie pratiquement pas avec la distance entre vignette et fenêtre de lecture et ne vient pas limiter la profondeur de champ.

De préférence également, la source lumineuse est constituée d'une rampe d'éléments émetteurs alignés parallèlement à la grande dimension de fenêtre. On approche ainsi une source linéaire, tout en utilisant des éléments du commerce, tels que des diodes électroluminescentes émettant dans le rouge profond. On réduit ainsi la sensibilité du lecteur à la lumière ambiante, tout en évitant que le taux de rétrodiffusion des barres ne diffère sensiblement du taux de rétrodiffusion en lumière blanche.

En disposition préférée, la barrette photosensible est du type dit à couplage de charges (C.C.D.) avec une surface photosensible divisée en domaines accolés séparés par des parois de potentiel créées par des tensions appliquées à des électrodes en peignes interdigités. Pendant une phase d'exposition les parois de potentiel sont fixes et les domaines forment puits de potentiel où s'accumulent des charges libérées par effet photoélectrique, à un débit fonction du flux lumineux reçu local. Au cours d'une phase de balayage ultérieure, des signaux modulés appliqués aux électrodes provoquent un déplacement progressif d'ensemble des parois vers une électrode de sortie à une extrémité de la barrette. Les charges accumulées dans les puits de potentiel sont entraînées par les parois pour s'écouler séquentiellement dans l'électrode de sortie, formant ainsi un signal électrique représentatif de l'image appliquée dans la phase d'exposition. Ces barrettes C.C.D. présentent une grande sensibilité, en raison notamment de l'accumulation des charges dans les puits de potentiel durant la phase d'exposition, associée à une bonne réponse dans les parties du spectre de grandes longueurs d'onde.

Des caractéristiques secondaires et des avantages de l'invention ressortiront d'ailleurs de la description qui va suivre à titre d'exemple, en référence aux dessins annexés dans lesquels :
la figure 1 est une vue schématique en perspective d'un lecteur de codes à barres "à main" selon l'état de la technique ;
la figure 2 est une vue schématique d'un lecteur selon l'invention ;
la figure 3 est une vue latérale des organes essentiels d'un lecteur selon l'invention.

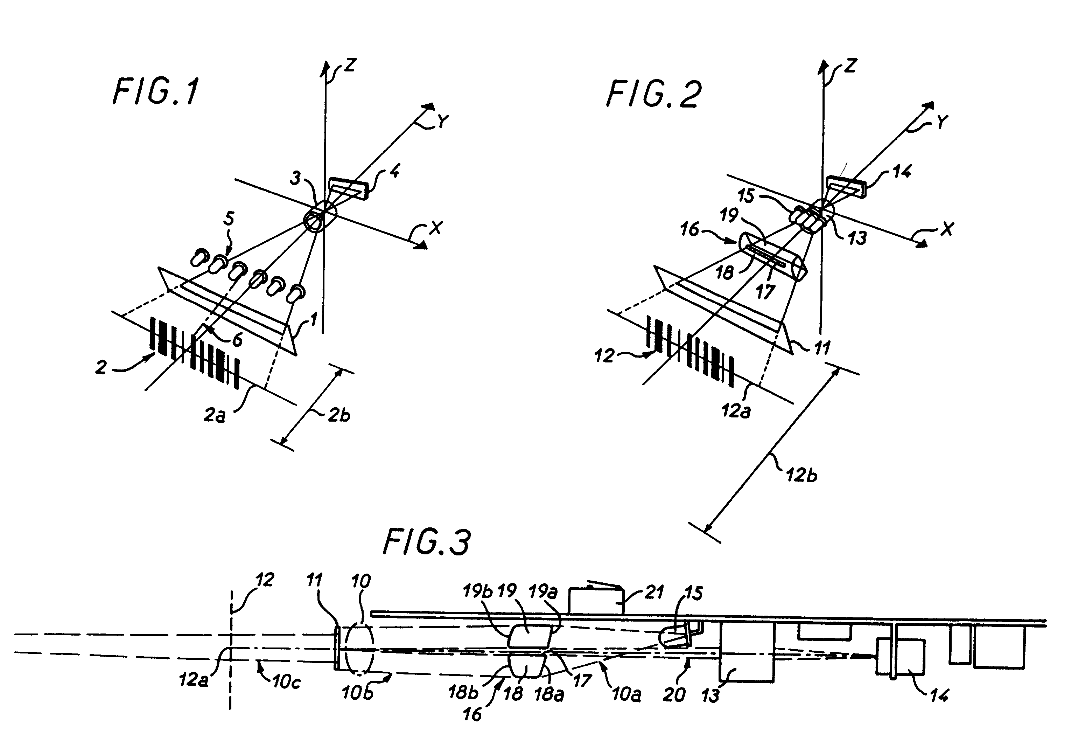

Le lecteur de l'état de la technique représenté figure 1 comporte une fenêtre de lecture 1 en forme de rectangle allongé dont la grande dimension est parallèle à un axe X. Un axe Y, proche de la normale à la fenêtre 1 en son centre, constitue l'axe optique du lecteur. Une vignette 2 de code à barres se dispose, pour la lecture parallèlement à la fenêtre 1, avec les barres transversales à une ligne de lecture 2a qui coupe l'axe optique Y. Sur cet axe optique Y, du côté opposé à la vignette 2 par rapport à la fenêtre de lecture 1, est disposé un objectif 3 dont l'axe principal coïncide avec l'axe optique du lecteur Y. Le trièdre trirectangle de référence comprenant les axes X, parallèle à la grande dimension de fenêtre, Y, axe optique du lecteur, et Z, sensiblement parallèle aux barres de vignette 2, est représenté centré sur le centre optique de l'objectif 3, conformément à la pratique usuelle. Le plan qui contient l'axe optique Y, et l'axe X parallèle à la grande dimension de fenêtre sera dit plan de mire X-Y. En outre le plan X-Z, normal à l'axe optique, définira pratiquement l'orientation du plan de vignette et du plan de fenêtre de lecture ; et le plan Y-Z, normal au plan de mire et contenant l'axe optique Y sera le plan de coupe où la marche des rayons lumineux apparaîtra le plus clairement.

Une barrette photosensible 4, qui comporte une multiplicité d'éléments récepteurs en ligne, adaptés à une exploration électrique séquentielle, est disposée avec son alignement d'éléments récepteurs dans le plan de mire X-Y et parallèlement à l'axe X, qui définit l'orientation de la grande dimension de la fenêtre de lecture 1. La barrette 4 peut être du type dit à couplage de charge (C.C.D.) dont la disposition et le fonctionnement ont été évoqués plus haut.

La barrette 4 est disposée dans un plan conjugué de celui de la vignette 2 pour l'objectif 3, de sorte que cet objectif forme sur la barrette 4 une image au point de la section de vignette 2 suivant la ligne de lecture 2a. Bien entendu, on parle ici de la vignette 2 dans la position optimale, et l'ouverture de l'objectif 3 détermine, autour de cette position optimale, une profondeur de champ que l'on sait calculer de façon classique, compte tenu de la résolution d'image voulue.

Une rampe d'éclairage 5, formée d'un alignement de diodes électroluminescentes émettant dans le rouge profond pour des raisons déjà évoquées ci-dessus, est disposée parallèlement à la grande dimension de fenêtre (et donc à l'axe X), à l'écart du plan de mire X-Y et en projection sur ce plan, entre l'objectif 3 et la fenêtre de lecture 1, et proche de cette dernière. La disposition de la rampe 5 à l'écart du plan de mire évite que cette rampe fasse écran sur le trajet du faisceau rétrodiffusé par la vignette 2 dans le plan de mire X-Y.

Mais la disposition de la rampe 5 à l'écart du plan de mire X-Y a pour conséquence que le plan utile d'éclairage, défini par l'alignement de la rampe 5 et la ligne de lecture 2a, forme avec le plan de mire X-Y un angle dièdre 6 d'arête 2a. Comme l'a fait ressortir plus haut la discussion sur la profondeur de champ effective, l'obliquité 6 du faisceau d'éclairage, conjointement avec l'ouverture de fenêtre 1 suivant l'axe Z détermine une profondeur de champ limitée 2b.

Selon la forme de réalisation choisie et représentée aux figures 2 et 3, le lecteur comporte, comme celui de l'état de la technique représenté figure 1, une fenêtre de lecture 11, un objectif 13 et une barrette photosensible 14, dont la disposition relative détermine un plan de mire X-Y, et un plan optimal pour la lecture d'une vignette de code à barres 12 suivant une ligne de lecture 12a. Une source lumineuse 13, constituée d'une rampe d'éléments émetteurs ou diodes électroluminescentes, alignés parallèlement à la grande dimension de fenêtre 11, c'est-à-dire parallèlement à l'axe X, est disposée à l'écart du plan de mire X-Y, mais, en projection sur ce plan, proche de l'objectif 13. Les plans X-Z et Y-Z du trièdre trirectangle sont définis comme précédemment.

Comme on le voit mieux sur la figure 3 (coupe suivant le plan Y-Z), une optique prismatique 16 dans son ensemble est disposée dans le trajet d'un faisceau, 10 dans son ensemble, émis par la rampe 15 en direction de la vignette 12. Cette optique prismatique 16 comporte des arêtes parallèles à l'axe X et de ce fait à la grande dimension de la fenêtre 11, et est constituée de deux réfracteurs, ou prismes élémentaires 18 et 19, respectivement en dessous et en dessus du plan de mire X-Y par rapport à la rampe 15, laissant entre eux une fente 17, d'épaisseur constante, par où passe le plan de mire X-Y et par conséquent le faisceau rétrodiffusé par la ligne de lecture 12a vers l'objectif 13 et la barrette photosensible 14.

Les réfracteurs 18 et 19 comportent, du côté de la rampe 15, une face ou dioptre plan 18a, 19a incliné par rapport au plan X-Z normal au plan de mire X-Y (figure 2), et du côté opposé des faces ou dioptres cylindriques 18b, 19b, dont les génératrices sont parallèles à l'axe X, comme les arêtes de prisme, et dont le plan de corde est incliné par rapport au plan X-Z, à l'opposé des dioptres plans 18a, 19a. Les angles (dièdres) de prisme entre les faces 18a, 19a et le plan de corde des faces respectivement 18b, 19b sont tels que, compte tenu de l'indice de réfraction du matériau optique dont est constituée l'optique prismatique 16, les rayons issus de la rampe 15 et incidents sur les faces 18a et 19a soient déviés pour émerger sensiblement parallèlement au plan de mire X-Y. En outre le rayon des dioptres cylindriques 18b, 19b sont déterminés, compte tenu de l'indice de réfraction, pour que la distance focale dans le plan de coupe Y-Z soit sensiblement égale à la distance qui sépare la rampe 15 du centre optique de l'optique prismatique 16. Par ces dispositions, le faisceau d'éclairage 10 comprend, en section transversale suivant le plan Y-Z, trois tronçons, un premier tronçon 10a divergeant de la rampe 15 à l'optique prismatique 16, un second tronçon 10b de la fenêtre de l'optique prismatique 16 à la fenêtre de lecture 11, constitué de deux nappes sensiblement parallèles au plan de mire X-Y séparées par un intervalle qui va s'évanouissant vers la fenêtre de lecture 11, et un troisième tronçon 10c, diaphragmé par la fenêtre 11 et constitué d'une seule nappe résultant de la fusion des deux nappes du tronçon 10b. Grâce à la fente 17, le faisceau 20 rétrodiffusé par la ligne de lecture 12a vers l'objectif 13 n'est pas occulté par l'optique prismatique 16. Ce faisceau 20 n'est pas non plus occulté par la rampe 15. Comme les réfracteurs 18 et 19 interceptent les rayons lumineux marginaux du faisceau 20 pour les renvoyer en direction de la rampe 15, ce faisceau 20 est diaphragmé par la fente 17 pour son trajet entre le réfracteur 16 et l'objectif 13, de sorte que la rampe 15 peut être disposée à distance relativement faible du plan de mire X-Y.

La description qui vient d'être faite de la formation du faisceau d'éclairage pour la vignette 12 a été limitée, pour la clarté de l'exposé, à l'optique du premier ordre. Bien entendu, pour optimiser le faisceau d'éclairage, on y introduit des corrections du second ordre. On remarquera ainsi que les faces planes d'entrée 18a et 19a des réfracteurs 18 et 19 sont généralement inclinées par rapport au plan X-Z de façon que les deux nappes du tronçon 10b de faisceau 10 convergent pour se fusionner dans le plan de la fenêtre de lecture 11. En outre les rayons de courbure et le centre de courbure (dans le plan Y-Z) des dioptres cylindriques 18b et 19b sont déterminés pour obtenir une très légère convergence du faisceau émergent 10b, 10c et coopérer, avec les faces en dioptres plans 18a, 19a, à la déviation du faisceau d'éclairage sans introduire des irrégularités gênantes d'éclairement dans le faisceau utile 10c.

Ainsi on obtient un éclairement de la vignette 12, à partir de la rampe 15 qui ne varie pratiquement pas avec la distance qui la sépare de la fenêtre de lecture 11. La profondeur de champ, schématisée en 12b sur la figure 2, n'est limitée que par l'ouverture de l'objectif 13, compatible avec la sensibilité de la barrette photosensible 14. En pratique, dans les conditions où un lecteur conforme à l'état de la technique représenté figure 1 présente une profondeur de champ 2b de 2 centimètres, un lecteur selon l'invention représenté figure 2 présentera une profondeur de champ de 10 centimètres.

On notera que l'augmentation de profondeur de champ comporte ses limites propres, au-delà desquelles des gains seraient illusoires. Ces limites résultent notamment de la difficulté d'orienter correctement le lecteur par rapport à la vignette, qui croit avec la distance entre fenêtre de lecture 11 et vignette 12, ainsi que de la réduction de largeur de l'image de ligne de lecture 12a formée sur la barrette photosensible 14.

Bien entendu, tout ce qui a été dit au sujet de l'étendue spectrale de la source lumineuse, ainsi que de l'utilisation de barrettes C.C.D. comme dispositif photosensible 14, à propos de l'état de la technique reste valable pour la présente invention.

On remarquera en outre que, aux causes de limitation de profondeur de champ résultant de l'optique géométrique viennent s'ajouter des causes liées au caractère quantifié de la disposition des éléments récepteurs sur la barrette photosensible. On comprendra que si le pas de la barrette, ou distance séparant les centres de deux éléments récepteurs consécutifs est du même ordre de grandeur que l'intervalle unité de code à barres dans l'image de la vignette 12 projetée sur la barrette 14 par l'objectif 13, les transitions entre barres sombres et claires ne seront pas reproduites à leur place dans le signal d'exploration. Il faut donc que la résolution de la barrette photosensible, entendue comme nombre d'éléments récepteurs par unité de longueur, soit bien supérieure à la résolution de l'image de vignette, entendue comme nombre d'intervalles unité par unité de longueur. On notera que, en matière de signaux électriques d'information, la résolution de la barrette se traite sous l'aspect d'un rapport signal/bruit.

Il va de soi que, à la barrette photosensible 14, sont associés des circuits de pilotage et d'exploitation des signaux électriques, tels que, périodiquement, les charges stockées dans les puits de potentiel de la barrette C.C.D. soient transférées séquentiellement à une électrode de sortie pour former un signal qui sera analysé pour déterminer s'il contient des informations représentatives d'un code à barres, puis, si la réponse à l'analyse est positive, décodé pour fournir un signal de sortie compatible avec l'appareillage associé.

Il suffit qu'une vignette soit présentée au lecteur dans une position relative convenable pour que soit élaboré un signal de sortie. Le lecteur est muni d'un voyant de signalisation lumineux qui s'allume lorsqu'un signal est élaboré. Il est donc possible de laisser le lecteur en service permanent. Toutefois, si la fréquence d'utilisation est relativement faible, on peut avoir intérêt à munir le lecteur d'une gâchette 21 dont la dépression fera passer le lecteur d'un état de veille à un état actif.

Bien entendu, l'invention n'est pas limitée à l'exemple décrit, mais en embrasse toutes les variantes d'exécution, dans le cadre des revendications.

Notamment il serait possible de disposer un miroir incliné entre optique prismatique et fenêtre de sortie pour infléchir le plan de mire en dièdre obtus d'arête parallèle à la grande dimension de fenêtre, pour faciliter le geste de lecture.

## Revendications

1. Lecteur de vignettes de codes à barres, du type dit "à main" avec une fenêtre de lecture (11) oblongue que l'on présente sensiblement parallèlement à la vignette (12) avec une grande dimension (X) en travers des barres, le lecteur comportant un objectif (13) avec un axe optique (Y) proche de la normale à la fenêtre (11) en son centre et propre à projeter une image conjuguée de la vignette (12) sur une barrette photosensible (14) comprenant une multiplicité d'éléments récepteurs à exploration électrique séquentielle, alignés dans un plan de mire (X-Y) contenant l'axe optique (Y) et parallèle à la grande dimension de fenêtre, et, disposée à l'écart du plan de mire une source lumineuse (15) émettant vers la vignette (12) à travers la fenêtre un faisceau étalé parallèlement à la grande dimension de la fenêtre (11), caractérisé en ce que le faisceau (10) traverse une optique prismatique (16) à arêtes parallèles à la grande dimension (X) de fenêtre, composée de deux réfracteurs (18, 19) disposés de part et d'autre d'une fente (17) où passe le plan de mire (X-Y), tels que le faisceau émergent (10b, 10c) émis par la source lumineuse (15) soit sensiblement symétrique par rapport au plan de mire (X-Y).

2. Lecteur de vignettes selon la revendication 1, caractérisé en ce que les deux réfracteurs (18, 19) présentent des dioptres cylindriques (18b, 19b) à génératrices parallèles aux arêtes d'optique prismatique, tels que le faisceau émergent (10b, 10c) soit sensiblement parallèle au plan de mire (X-Y).

3. Lecteur de vignettes selon l'une des revendications 1 et 2, caractérisé en ce que la source lumineuse (15) est constituée d'une rampe d'éléments émetteurs, alignés parallèlement à la grande dimension (X) de fenêtre.

4. Lecteur de vignettes selon la revendication 3, caractérisé en ce que les éléments émetteurs sont des diodes électroluminescentes émettant dans le rouge profond.

5. Lecteur de vignettes selon l'une quelconque des revendications 1 à 4, caractérisé en ce que la barrette photosensible (14) est du type dit : à couplage de charge ou C.C.D.

## Patentansprüche

1. Strichkodevignettenleser vom sogenannten manuellen Typ mit einem langgestreckten Lesefenster (11), das man im wesentlichen parallel zur Vignette (12) mit einer großen Abmessung (X) quer zu den Strichen anordnet, wobei der Leser ein Objektiv (13) besitzt, dessen optische Achse (Y) der Normalen auf das Fenster (11) in dessen Mittelpunkt nahe ist und das ein konjugiertes Bild der Vignette (12) auf einen fotoempfindlichen Stab (14) projizieren kann, der eine Vielzahl von Empfangselementen mit sequentieller elektrischer Abtastung aufweist, die in einer die optische Achse (Y) enthaltenden Visierebene (X-Y) in einer Linie liegen, und zur großen Fensterabmessung parallel ist, sowie eine in einem Abstand von der Visierebene angeordnete Lichtquelle (15), die auf die Vignette (12) zu durch das Fenster einen parallel zur großen Abmessung des Fensters (11) ausgebreiteten Strahl aussendet, dadurch gekennzeichnet, daß der Strahl (10) eine Prismenoptik (16) mit zur großen Fensterabmessung (X) parallelen Kanten durchquert, die aus zwei Refraktoren (18, 19) besteht, die zu beiden Seiten eines Spalts (17) angeordnet sind, durch den die Visierebene (X-Y) verläuft, so daß der von der Lichtquelle (15) ausgesendete, austretende Strahl (10b, 10c) im wesentlichen bezüglich der Visierebene (X-Y) symmetrisch ist.

2. Vignettenleser nach Anspruch 1, dadurch gekennzeichnet, daß die beiden Refraktoren (18, 19) zylindrische Diopter (18b, 19b) mit zu den Kanten der Prismenoptik parallelen Erzeugenden aufweisen, so daß der austretende Strahl (10b, 10c) zur Visierebene (X-Y) im wesentlichen parallel ist.

3. Vignettenleser nach einem der Ansprüche 1 und 2, dadurch gekennzeichnet, daß die Lichtquelle (15) aus einem Satz von Sendeelementen besteht, die parallel zur großen Fensterabmessung (X) in einer Linie liegen.

4. Vignettenleser nach Anspruch 3, dadurch gekennzeichnet, daß die Sendeelemente Elektrolumineszenzdioden sind, die im Tiefrot senden.

5. Vignettenleser nach einem der Ansprüche 1 bis 4, dadurch gekennzeichnet, daß der fotoempfindliche Stab (14) vom Typ Ladungskopplung oder C.C.D. ist.

## Claims

1. A bar code label reader of the type referred to as the 'manual' type having an oblong reading window (11) which is presented substantially parallel to the label (12) with a large dimension (X) across the bars, the reader comprising a lens (13) with an optical axis (Y) close to the normal to the window (11) at its centre and capable of projecting a conjugate image of the label (12) on to a photosensitive strip (14) comprising a multiplicity of receiver elements involving sequential electrical scanning, which are aligned in a sighting plane (X-Y) containing the optical axis (Y) and parallel to the large dimension of the window and, disposed at a spacing from the sighting plane, a light source (15) which emits towards the label (12) through the window a beam which is spread out parallel to the large dimension of the window (11), characterised in that the beam (10) passes through a prismatic optical member (16) with edges which are parallel to the large dimension (X) of the window, the optical member being composed of two refractors (18, 19) disposed on respective sides of a slot (17) where the sighting plane (X-Y) passes such that the emergent beam (10b, 10c) emitted by the light source (15) is substantially symmetrical with respect to the sighting plane (X-Y).

2. A label reader according to claim 1 characterised in that the two refractors (18, 19) have cylindrical lens portions (18b, 19b) with generatrices which are parallel to the prismatic optical member edges such that the emergent beam (10b, 10c) is substantially parallel to the sighting plane (X-Y).

3. A label reader according to one of claims 1 and 2 characterised in that the light source (15) is formed by an array of emitting elements aligned parallel to the large dimension (X) of the window.

4. A label reader according to claim 3 characterised in that the emitting elements are light-emitting diodes which emit in deep red.

5. A label reader according to any one of claims 1 to 4 characterised in that the photosensitive strip (14) is of the type referred to as a charge-coupled device or CCD.
